# EUROPEAN PATENT SPECIFICATION

(11) **EP 2 370 506 B1**
(45) Date of publication and mention of the grant of the patent: **15.03.2017**
(21) Application number: 09756709.3
(22) Date of filing: 12.11.2009
(51) Int. Cl.: C08J 7/12

(54) **METHOD AND APPARATUS FOR FUNCTIONALIZING A TARGET REGION OF A SURFACE**
VERFAHREN UND VORRICHTUNG ZUR FUNKTIONALISIERUNG EINES ZIELBEREICHS EINER OBERFLÄCHE
PROCÉDÉ ET APPAREIL POUR FONCTIONNALISER UNE RÉGION CIBLE D'UNE SURFACE

(30) Priority: 26.11.2008 DE 102008059125
(43) Date of publication of application: 05.10.2011
(73) Proprietor: L'Air Liquide Société Anonyme pour l'Etude et l'Exploitation des Procédés Georges Claude, 75007 Paris (FR); Air Liquide Deutschland GmbH, 40235 Düsseldorf (DE)
(72) Inventor: VAN BONN, Rolf, 47269 Duisburg (DE)
(74) Representative: Mellul-Bendelac, Sylvie Lisette
(86) International application number: PCT/EP2009/065065
(87) International publication number: WO 2010/060803

(56) References cited:
- EP-A- 0 629 654
- US-A- 4 743 419
- US-A- 5 292 466
- DU TOIT F J ET AL: "Surface fluorination of polypropylene - 1. Characterisation of surface properties" JOURNAL OF FLUORINE CHEMISTRY, ELSEVIER, NL, vol. 98, no. 2, 1 September 1999 (1999-09-01), pages 107-114, XP004199244 ISSN: 0022-1139

## Description

The present invention relates to a method and apparatus for functionalizing a target region of a surface which comprises at least plastic. In particular, plastics surfaces and/or other surfaces provided with a corresponding coating, such as, for example, a finish, are relevant here. In particular, fluorination processes and a corresponding fluorination apparatus are relevant here.

The functionalization of surfaces, i.e. the at least partial exchange of hydrogen atoms in plastics surfaces for other atoms, such as, for example, in particular fluorine or chlorine, serves for changing the surface properties of the surface of the plastics. This is in particular the changing of properties, such as, for example, the static friction and/or sliding friction, the coefficient of permeation, etc. Thus, for example, EP-B-0 566 883 B1 discloses the functionalization of fuel tanks for reducing the fuel loss by permeation. Other possibilities are the reduction of the coefficients of friction, for example in the case of wiper blades for windscreen wipers, as disclosed, for example, in WO-A-2007/110151.

Only methods in which the total surface of a component was fluorinated are known to date from the prior art. This is definitely advantageous or even necessary for small components, such as, for example, wiper blades or in the production of vehicle tanks but rules out a corresponding functionalization when only a part of the surface of an object is to be functionalized and the total object is too large for functionalization or functionalization of the total surface is not possible economically or is in principle not advantageous. For example, the durability of adhesively bonded aerials, for example for mobile radio, radio or GPS receivers, could be substantially improved by functionalization of a part of a surface of a motor vehicle, the durability could be increased and the limiting speed up to which such aerials can be reliably operated could be increased. However, it is both uneconomical to functionalize the entire vehicle and undesired since the properties of the object surface which are obtained by the functionalization are not to be established over the entire region of the vehicle.

Starting from this, it is the object of the present invention at least partly to overcome the disadvantages known from the prior art and in particular to propose a method and an apparatus for functionalizing surfaces, in which only a defined target region of the surface is functionalized.

These objects are achieved by a method and an apparatus having the features of the independent claims. The respective dependent claims are directed at advantageous further developments.

The functionalization of a target region is understood in particular as meaning that some of the hydrogen atoms of the plastic in the surface of the target region are exchanged for fluorine, chlorine and/or bromine. Both partial functionalization in which only some of the atoms are exchanged and complete functionalization in which all atoms are exchanged are possible. The gas-tight sealing of the target region is understood as meaning in particular that uncontrolled emergence of the treatment gas into the environment is prevented. It is also understood as meaning that a gas can flow through the reaction space during the functionalization, said gas flowing from a gas supply through the reaction space and then through a gas discharge out of the reaction space.

The gas-tight sealing of the reaction space, comprising a target region, results only in functionalization of the surface of the object of the target region. Thus, targeted partial functionalizations of large objects too are possible without the entire object having to be functionalized.

According to the method according to the invention, the reaction space is formed by placing a reaction hood in a gas-tight manner on the surface of the object.

Here, the reaction hood can be formed in such a way that it exactly bounds the target region. Thus, the target region can be defined in particular by the contour of the reaction hood and its contact area on the surface of the object. Preferably, the reaction hood has sealing means, for example elastomeric sealing means, which produce a gas-tight seal with respect to the environment, in the contact region.

According to an advantageous configuration of the method according to the invention, the reaction space is flushed at least once with a purge gas before and/or after the gas-phase reaction.

The purge gas used is in particular an inert gas, for example nitrogen (N₂). The flushing is carried out in an advantageous manner before the gas-phase reaction with the treatment gas in particular when a reaction of the atmospheric oxygen is to be prevented during the functionalization of the surface. In this case, the reaction space is flushed before the gas-phase reaction with the treatment gas. Here, either a specifiable number of flushing operations can be effected or continuous flushing is effected until the oxygen fraction in the gas in the reaction space has fallen below a specifiable limit.

Flushing after the gas-phase reaction is effected in order to remove incompletely reacted, i.e. spent treatment gas or harmful constituents thereof, such as, for example, fluorine, hydrogen fluoride, chlorine and/or hydrogen chloride. This is advantageously intended, for example, to avoid releasing fluorine or hydrogen fluoride to the environment. Flushing after the gas-phase reaction is effected in an advantageous manner here until a certain variable, such as, for example, a concentration of the gas in the reaction space or in the exit gas during flushing from the reaction space falls below a specifiable limit.

According to a further advantageous configuration of the method according to the invention, the treatment gas comprises at least one of the following gases:
d) hydrogen fluoride (HF);
e) hydrogen chloride (HCl);
f) molecular oxygen (O₂); and
g) ozone (O₃).

In particular, the treatment gas also comprises mixtures of at least two of these gases. In addition, the treatment gas may also comprise at least one inert gas, such as, for example, nitrogen, argon and/or helium.

According to a further advantageous configuration of the method according to the invention, the pressure of the gas in the reaction space is reduced at least from time to time. As a result, evacuation of the reaction space, i.e. reduction of the pressure to a specifiable limiting pressure, is possible. Furthermore, it is possible to carry out the functionalization at a treatment pressure of the treatment gas below the ambient pressure or above the ambient pressure. Advantageously, the reaction hood is not only gas-tight but also pressure-tight. The functionalization at
a treatment pressure below the ambient pressure has the advantage that the probability of emergence of the treatment gas is reduced.

According to a further advantageous configuration of the method according to the invention, at least one of the following parameters:
a) the concentration of at least one of the following elements: chlorine, fluorine and bromine in the treatment gas;
b) the duration of the gas-phase reaction;
c) the pressure of the treatment gas in the reaction space;
d) the number of processes for filling the reaction space with the treatment gas;
e) the temperature of the treatment gas;
f) the temperature of the surface in the target region; and
g) the composition of the treatment gas
is set and/or varied as a function of at least one of the following variables:
A) the size of the target region;
B) the surface of the target region;
C) the type of plastic in the target region;
D) the amount of plastic in the target region;
E) the degree of functionalization to be achieved;
F) the surface characteristics to be achieved in the target region; and
G) the volume of the reaction space.

The size of the target region is understood as meaning the geometrical area within the boundary of the reaction space. The surface of the target region is understood as meaning the surface area which is obtained taking into account the boundaries of the reaction space and the surface topographies of the surface of the target region. The degree of functionalization is understood as meaning a percentage which in the case of the relative proportion of the hydrogen atoms replaced by, for example, fluorine, chlorine and/or bromine.

The surface characteristics to be achieved in the target region can be defined, for example, via a corresponding coefficient of friction, degree of permeation which is not to be reached or the like.

It is particularly preferable in this context that a model of the gas-phase reaction involving reaction kinetics is relied upon in the adjustment and/or variation.

According to a further aspect of the present invention, an apparatus for functionalizing a target region of a surface of an object is proposed, which apparatus comprises a reaction hood which is intended for placing gas-tight on the target region and has at least one gas supply which can be connected to a treatment gas source.

The reaction space is formed by placing the reaction hood on the surface of the object. Here, gas-tight means in particular that no treatment gas can emerge into the environment on carrying out the gas-phase reaction with the treatment gas. It is possible that the treatment gas flows dynamically during the treatment through the reaction space bounded by the reaction hood. Further gas supplies, for example for purge gas or the like, are possible.

According to an advantageous configuration of the apparatus according to the invention, a gas discharge for removing gas present within the reaction hood is formed, flow guiding means for feeding gas from the gas supply to the surface of the object and for removing gas from the surface to the gas discharge being formed in the interior of the reaction hood.

The flow guiding means are formed in particular so that direct flow-through of the treatment gas from the gas supply to the gas discharge without contact with the surface is prevented. The flow guiding means can have in particular the form of a bell or of a funnel which is formed within the reaction hood and is connected to the gas supply, the flow guiding means being present geometrically between the surface of the target region which is to be treated and the gas discharge. Thus, the flow guiding means can form, for example, an inner space in which the surface to be treated is present and which is connected to the gas supply, first flow taking place through the inner space during operation and then said space being left by flow away in the direction of the gas discharge.

According to an advantageous embodiment of the apparatus according to the invention, a treatment gas source and a purge gas source which can be connected to the gas supply are formed.

These may be in particular gas cylinders or other reservoirs from which treatment gas, for example hydrogen fluoride or a mixture of hydrogen fluoride, fluorine and/or nitrogen, can be taken. The purge gas source is in particular a source of nitrogen, argon and/or helium.

According to an advantageous configuration of the apparatus according to the invention, a gas discharge for removing gas present within the reaction hood is formed, which gas discharge can be connected to a conveying means for removing the gas from the reaction hood.

A conveying means is understood as meaning in particular a pump or vacuum pump by means of which the reaction space formed by the reaction hood can be evacuated via the gas discharge. In addition to evacuation, i.e. pressure reduction, within the reaction space, the conveying means can also be used for removing, for example, purge gas or treatment gas without reducing the pressure within the reaction hood or the reaction space.

The details and advantages disclosed for the method according to the invention can be transferred and applied to the apparatus according to the invention, and vice versa.

Below, the invention is explained in more detail with reference to the attached figures without being limited to the details and embodiments shown there. The figures show the following schematically:
- Fig. 1:: a first working example of an apparatus according to the invention during a flushing process;
- Fig. 2:: the first working example of an apparatus according to the invention during the functionalization process;
- Fig. 3:: a second working example of an apparatus according to the invention;
- Fig. 4:: an example of a surface to be fluorinated; and
- Fig. 5:: the corresponding target region of the example according to Fig. 4.

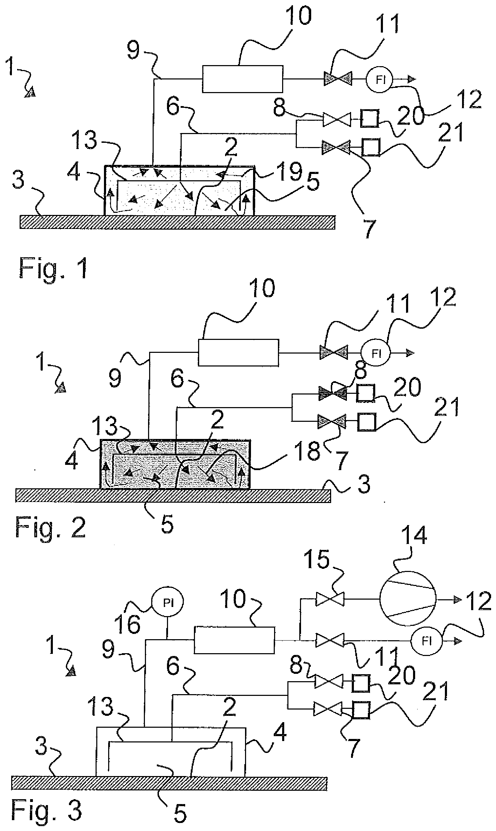

Fig. 1 schematically shows an apparatus 1 for functionalizing a target region 2 of a surface 3 of an object, which apparatus is operated by the method according to the invention. The apparatus 1 comprises a reaction hood 4 for placing gas-tight on the target region 2. The target region 2 comprises plastic in its surface 3 and is formed at least partially from plastic and/or at least partly coated with plastic. Here, a plastic is understood as meaning in particular polyethylene, polypropylene, polyester, polymer and/or ethylene copolymers. Here, a coating is also understood as meaning a finish coat or the like. When placed on the surface 3, the reaction hood 4 forms the reaction space 5. This reaction space 5 is sealed gas-tight with respect to the environment. The reaction hood 4 has a gas supply 6. Treatment gas 18, for example a mixture of hydrogen fluoride (HF) and nitrogen (N₂) or of fluorine (F₂) and nitrogen (N₂) or a purge gas 19, such as, for example, nitrogen, can be introduced into the treatment space 5 through the gas feed 6. For this purpose, the gas feed 6 can be connected via a treatment gas valve 8 to a treatment gas source 20. Treatment gas source 20 and purge gas source 21 can be in the form of appropriately filled gas cylinders. The treatment gas source 20 thus provides, for example, a mixture of 10% by volume of fluorine and 90% by volume of nitrogen or 1% of fluorine and 90% of nitrogen.

Gas present in the reaction hood 4 or in the reaction space 5 can be removed via a gas discharge 9. An absorber 10, which is filled, for example, with alumina (Al₂O₃), is formed in the gas discharge 9. Harmful fractions in the treatment gas 18 are filtered out of the gas stream via the adsorber 10. In order to prevent the harmful components from breaking through the adsorber 10, a corresponding analysis means, such as, for example, a sensor, can be formed downstream of the adsorber 10. Furthermore, a discharge valve 11 is formed in the gas discharge line 9. Furthermore, a flow meter 12 by means of which the metered amount of treatment gas 18 or purged gas can be monitored is formed.

Fig. 1 shows a flushing process in which the reaction space 5 is flushed with nitrogen as purge gas 19 by opening the purge gas valve 7 and the discharge valve 11. This is carried out in order to remove atmospheric oxygen from the reaction space 5.

Fig. 2 shows the first working example of an apparatus 1 according to the invention for functionalizing a target region 2 of a surface 3 during the gas-phase reaction for functionalization. Here, the treatment gas valve 8 is opened, it being possible, if appropriate, also to open the purge gas valve 7 in order to introduce a mixture of nitrogen and fluorine and/or hydrogen fluoride. If appropriate, flow meters for the individual components of the treatment gas 19 are to be provided for this purpose. Alternatively, a treatment gas source 20 which provides the mixture of the treatment gas 18 which is finally to be used, for example a mixture of hydrogen fluoride and nitrogen or of molecular fluorine (F₂) in nitrogen, can also be connected to the treatment gas valve 8. The discharge valve 11 is opened in order to permit the removal of the treatment gas 18 which has been at least partly consumed by reaction of the hydrogen fluoride or fluorine. Harmful components, such as fluorine or hydrogen fluoride, are adsorbed onto the adsorber 10 thereby. Thus, no fluorine or hydrogen fluoride enters the environment. It is possible to form means for monitoring the breakthrough of the fluorine or hydrogen fluoride through the adsorber 10, which produce, for example, a colour change in the adsorber 10 when a certain point of the adsorber exceeds a certain incorporated amount of the substance to be incorporated, or via a gas analysis downstream of the adsorber 10. In order to ensure that the treatment gas 18 flows past the surface 3 of the target region 2 and a corresponding functionalization reaction takes place, flow guiding means 13 which in the present working example are in the form of a sort of bell are formed. These flow guiding means 13 have a gap between surface 3 and flow guiding means 13, through which gap the spent treatment gas 18 can flow away towards the exit gas discharge 9. Thus, a highly effective functionalization reaction is ensured.

Fig. 3 schematically shows a second working example of an apparatus 1 according to the invention, identical elements being provided with identical reference numerals. In the second working example, the apparatus 1 has a conveying means 14 which is in the form of a vacuum pump and by which the reaction space 5 can be evacuated via a conveying means valve 15. Here, evacuation is understood as meaning that a significant reduction of the pressure within the reaction space 5 is effected. This permits a procedure in which first an evacuation of the reaction space 5 down to 1 mbar is effected for removing the atmospheric oxygen. If appropriate, a plurality of cycles of flushing with purge gas and evacuation can be carried out until the partial pressure of oxygen is below a specifiable limit.

Thereafter, the required amount of treatment gas 18 is added via the treatment gas valve 8. The existing pressure can be checked here via the pressure-measuring device 16. After a specifiable pressure of the treatment gas 18 in the reaction space 5 has been reached, the treatment gas valve 8 is closed in order to ensure that the functionalization reaction takes place at a defined treatment gas pressure, preferably at reduced pressure. As a result of the action of the fluorine in the treatment gas 18, the plastics surface is modified by exchange of the hydrogen atoms for fluorine atoms. The fluorination reaction can be terminated by evacuation of the treatment gas 18 from reaction space 4. Flushing is then effected with a purge gas 19 by closing the treatment gas valve 8 and opening the purge gas valve 7. For example, nitrogen can be introduced here to a specified pressure, for example to a pressure of 950 mbar (millibar) absolute, which can likewise be monitored via the pressure-measuring device 16. Further flushing of the reaction space 5 is effected by evacuating and flooding with purge gas 19 in succession. This can be repeated until no harmful components are present in the reaction space 5.

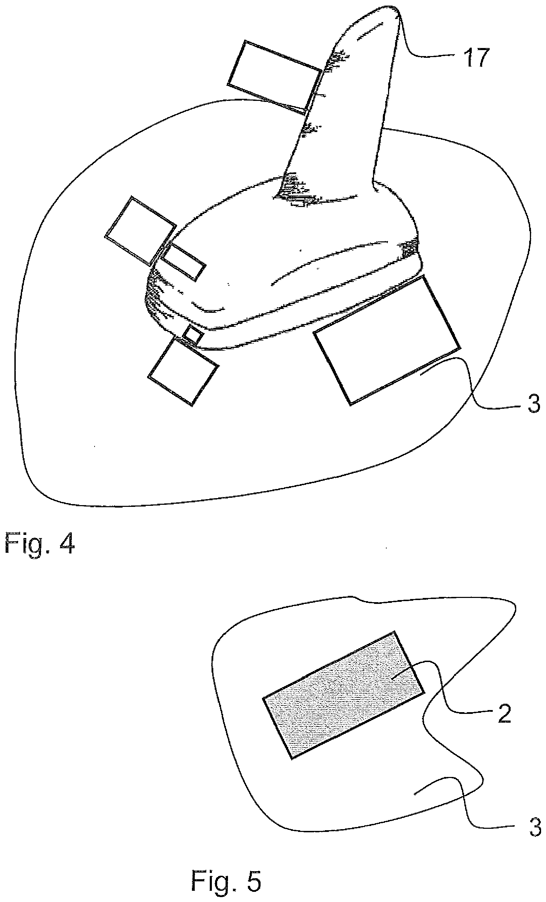

Fig. 4 schematically shows a possible use example of the method according to the invention. Frequently, aerial modules 17 have to be fastened on the surface 3 of motor vehicles. These aerial modules 17 contain or cover one or more aerials, as required, for example, for mobile radio, radio and/or GPS. For this purpose, the aerial module 17 or a part of the aerial module 17 should be connected to the surface 3. By means of the method according to the invention, exclusively the target region 2, as indicated schematically in Fig. 5, can be functionalized or fluorinated. As a result, adhesive bonding of the aerial module 17 on the surface 3 is possible without it being necessary to modify the entire surface 3. Particularly in the case of motor vehicles, this is not desired and also cannot be carried out economically. As a result of the functionalization of the target region 2, the aerial module 17 is better retained than without functionalization, so that a higher speed is possible with the corresponding motor vehicle without the aerial module being torn off.

The method according to the invention and the apparatus 1 according to the invention advantageously permit the functionalization and in particular fluorination of parts of surfaces 3 in which a reaction space 5 comprising a target region 2 is created by placing an appropriately formed reaction hood 4 and thus only the target region 2 is modified in its surface. The remaining surface 3 remains unmodified. This can also be effected, in particular, in the case of large objects whose surface 3 could otherwise not be functionalized or could not be economically functionalized.

### List of reference numerals

- 1: Apparatus for functionalizing a target region of a surface
- 2: Target region
- 3: Surface
- 4: Reaction hood
- 5: Reaction space
- 6: Gas feed
- 7: Purge gas valve
- 8: Treatment gas valve
- 9: Gas discharge
- 10: Adsorber
- 11: Discharge valve
- 12: Flow meter
- 13: Flow guiding means
- 14: Conveying means
- 15: Conveying means valve
- 16: Pressure-measuring device
- 17: Aerial module
- 18: Treatment gas
- 19: Purge gas
- 20: Treatment gas source
- 21: Purge gas source

## Claims

1. Method for functionalizing a target region (2) of a surface (3) of an object, at least the surface (3) of the object comprising plastic at least in the target region (2), the functionalization being effected by a gas-phase reaction with a treatment gas (18) comprising at least one of the following elements:
a) fluorine;
b) chlorine; and
c) bromine
in the target region (2), **characterized by** the following way :
- placing a reaction hood (4) gas-tight on the target region (2) of the surface (3) of the object, to form a reaction space (5), this reaction space being sealed gas-tight with respect to the environment;
- introducing the treatment gas (18) into the reaction space (5).

2. Method according to claim 1, in which the reaction space (5) is flushed at least once with a purge gas (19) before and/or after the gas-phase reaction.

3. Method according to any of the preceding claims, in which the treatment gas (18) comprises at least one of the following gases:
d) hydrogen fluoride (HF);
e) hydrogen chloride (HCl);
f) ammonia (NH₃);
g) molecular oxygen (O₂); and
h) ozone (O₃).

4. Method according to any of the preceding claims, in which the pressure of the gas in the reaction space (5) is reduced at least from time to time.

5. Method according to any of the preceding claims, in which at least one of the following parameters:
a) the concentration of at least one of the following elements: chlorine, fluorine and bromine in the treatment gas (18);
b) the duration of the gas-phase reaction;
c) the pressure of the treatment gas (18) in the reaction space (5);
d) the number of processes for filling the reaction space (5) with the treatment gas (18);
e) the temperature of the treatment gas (18);
f) the temperature of the surface (3) in the target region (2); and
g) the composition of the treatment gas (18)
is set and/or varied as a function of at least one of the following variables:
A) the size of the target region (2);
B) the surface of the target region (2);
C) the type of plastic in the target region (2);
D) the amount of plastic in the target region (2);
E) the degree of functionalization to be achieved;
F) the surface characteristics to be achieved in the target region (2); and
G) the volume of the reaction space (5).

6. Method according to Claim 5, in which a model of the gas-phase reaction involving reaction kinetics is relied upon in the setting and/or variation.

7. Apparatus (1) for functionalizing a target region (2) of a surface (3) of an object, comprising a reaction hood (4) for placing gas-tight on the target region (2), which has at least one gas feed (6) which can be connected to a treatment gas source (20).

8. Apparatus (1) according to Claim 7, in which a gas discharge (9) for removing gas present within the reaction hood (4) is formed, flow guiding means (13) for feeding gas from the gas feed (6) to the surface (3) of the object and for removing gas from the surface (3) to the gas discharge (9) being formed in the interior of the reaction hood (4).

9. Apparatus (1) according to either of Claims 7 and 8, in which a treatment gas source (20) and a purge gas source (21) which can be connected to the gas feed (6) are formed.

10. Apparatus (1) according to any of Claims 7 to 9, in which a gas discharge (9) which is intended for removing gas present within the reaction hood (4) and can be connected to a conveying means (14) for removing the gas from the reaction hood (4) is formed.

## Patentansprüche

1. Verfahren zur Funktionalisierung eines Zielbereichs (2) einer Oberfläche (3) eines Objektes, wobei zumindest die Oberfläche (3) des Objektes zumindest im Zielbereich (2) Kunststoff umfasst, wobei die Funktionalisierung durch eine Gasphasenreaktion mit einem Behandlungsgas (18) umfassend mindestens eines der folgenden Elemente:
a) Fluor;
b) Chlor; und
c) Brom
im Zielbereich (2) erfolgt, **gekennzeichnet durch** Folgendes:
- gasdichtes Auflegen einer Reaktionshaube (4) auf den Zielbereich (2) der Oberfläche (3) des Objektes, um einen Reaktionsraum (5) auszubilden, wobei dieser Reaktionsraum in Bezug auf die Umgebung gasdicht abgeschlossen ist;
- Einbringen des Behandlungsgases (18) in den Reaktionsraum (5).

2. Verfahren nach Anspruch 1, bei dem der Reaktionsraum (5) vor und/oder nach der Gasphasenreaktion zumindest einmal mit einem Spülgas (19) gespült wird.

3. Verfahren nach einem der vorhergehenden Ansprüche, bei dem das Behandlungsgas (18) mindestens eines der folgenden Gase umfasst:
d) Fluorwasserstoff (HF);
e) Chlorwasserstoff (HCl);
f) Ammoniak (NH₃);
g) molekularen Sauerstoff (O₂); und
h) Ozon (O₃).

4. Verfahren nach einem der vorhergehenden Ansprüche, bei dem der Druck des Gases im Reaktionsraum (5) zumindest zeitweise reduziert wird.

5. Verfahren nach einem der vorhergehenden Ansprüche, bei dem mindestens einer der folgenden Parameter:
a) die Konzentration mindestens eines der folgenden Elemente: Chlor, Fluor und Brom im Behandlungsgas (18);
b) die Dauer der Gasphasenreaktion;
c) der Druck des Behandlungsgases (18) im Reaktionsraum (5);
d) die Anzahl der Füllvorgänge des Reaktionsraumes (5) mit dem Behandlungsgas (18);
e) die Temperatur des Behandlungsgases (18);
f) die Temperatur der Oberfläche (3) im Zielbereich (2); und
g) die Zusammensetzung des Behandlungsgases (18)
in Abhängigkeit mindestens einer der folgenden Größen eingestellt und/oder variiert wird:
A) der Größe des Zielbereichs (2);
B) der Oberfläche des Zielbereichs (2);
C) der Art des Kunststoffs im Zielbereich (2);
D) der Menge an Kunststoff im Zielbereich (2);
E) des zu erzielenden Funktionalisierungsgrades;
F) der zu erzielenden Oberflächenbeschaffenheit im Zielbereich (2); und
G) des Volumens des Reaktionsraumes (5).

6. Verfahren nach Anspruch 5, bei dem bei der Einstellung und/oder Variation auf ein reaktionskinetisches Modell der Gasphasenreaktion zurückgegriffen wird.

7. Vorrichtung (1) zur Funktionalisierung eines Zielbereichs (2) einer Oberfläche (3) eines Objektes, umfassend eine Reaktionshaube (4) zum gasdichten Auflegen auf den Zielbereich (2), die zumindest eine Gaszuführung (6) aufweist, die mit einer Behandlungsgasquelle (20) verbindbar ist.

8. Vorrichtung (1) nach Anspruch 7, bei der eine Gasabführung (9) zur Abführung von innerhalb der Reaktionshaube (4) befindlichem Gas ausgebildet ist, wobei im Inneren der Reaktionshaube (4) Strömungsleitmittel (13) zur Zuführung von Gas von der Gaszuführung (6) zur Oberfläche (3) des Objektes und zur Abführung von Gas von der Oberfläche (3) zur Gasabführung (9) ausgebildet sind.

9. Vorrichtung (1) nach einem der Ansprüche 7 und 8, bei der eine Behandlungsgasquelle (20) und eine Spülgasquelle (21) ausgebildet sind, die mit der Gaszuführung (6) verbindbar sind.

10. Vorrichtung (1) nach einem der Ansprüche 7 bis 9, bei der eine Gasabführung (9) ausgebildet ist, die zur Abführung von innerhalb der Reaktionshaube (4) befindlichem Gas bestimmt ist und die mit einem Fördermittel (14) zur Abführung des Gases aus der Reaktionshaube (4) verbindbar ist.

## Revendications

1. Procédé pour fonctionnaliser une région cible (2) d'une surface (3) d'un objet, au moins la surface (3) de l'objet comprenant du plastique au moins dans la région cible (2), la fonctionnalisation étant effectuée par une réaction en phase gazeuse avec un gaz de traitement (18) comprenant au moins un des éléments suivants :
a) fluor ;
b) chlore ; et
c) brome
dans la région cible (2), **caractérisé par** la manière suivante :
- placement d'un couvercle de réaction (4) étanche au gaz sur la région cible (2) de la surface (3) de l'objet, pour former un espace de réaction (5), cet espace de réaction étant scellé pour être étanche au gaz par rapport à l'environnement ;
- introduction du gaz de traitement (18) dans l'espace de réaction (5).

2. Procédé selon la revendication 1, dans lequel l'espace de réaction (5) est rincé au moins une fois avec un gaz de purge (19) avant et/ou après la réaction en phase gazeuse.

3. Procédé selon l'une quelconque des revendications précédentes, dans lequel le gaz de traitement (18) comprend au moins un des gaz suivants :
d) fluorure d'hydrogène (HF) ;
e) chlorure d'hydrogène (HCl) ;
f) ammoniac (NH₃) ;
g) dioxygène (O₂) ; et
h) ozone (O₃).

4. Procédé selon l'une quelconque des revendications précédentes, dans lequel la pression du gaz dans l'espace de réaction (5) est réduite au moins de temps en temps.

5. Procédé selon l'une quelconque des revendications précédentes, dans lequel au moins un des paramètres suivants :
a) la concentration d'au moins un des éléments suivants : chlore, fluor et brome dans le gaz de traitement (18) ;
b) la durée de la réaction en phase gazeuse ;
c) la pression du gaz de traitement (18) dans l'espace de réaction (5) ;
d) le nombre de processus pour remplir l'espace de réaction (5) avec le gaz de traitement (18) ;
e) la température du gaz de traitement (18) ;
f) la température de la surface (3) dans la région cible (2) ; et
g) la composition du gaz de traitement (18)
est réglé et/ou modifié en fonction d'au moins une des variables suivantes :
A) la taille de la région cible (2) ;
B) la surface de la région cible (2) ;
C) le type de plastique dans la région cible (2) ;
D) la quantité de plastique dans la région cible (2) ;
E) le degré de fonctionnalisation à atteindre ;
F) les caractéristiques de surface à atteindre dans la région cible (2) ; et
G) le volume de l'espace de réaction (5).

6. Procédé selon la revendication 5, dans lequel un modèle de la réaction en phase gazeuse impliquant la cinétique de réaction sert de base au réglage et/ou à la variation.

7. Appareil (1) pour fonctionnaliser une région cible (2) d'une surface (3) d'un objet, comprenant un couvercle de réaction (4) à placer de manière étanche au gaz sur la région cible (2), qui a au moins une alimentation en gaz (6) qui peut être reliée à une source de gaz de traitement (20).

8. Appareil (1) selon la revendication 7, dans lequel une décharge de gaz (9) pour retirer du gaz présent à l'intérieur du couvercle de réaction (4) est formée, un moyen de guidage de flux (13) pour alimenter en gaz de l'alimentation en gaz (6) à la surface (3) de l'objet et pour retirer du gaz de la surface (3) à la décharge de gaz (9) étant formés à l'intérieur du couvercle de réaction (4).

9. Appareil (1) selon l'une des revendications 7 et 8, dans lequel une source de gaz de traitement (20) et une source de gaz de purge (21) qui peut être reliée à l'alimentation en gaz (6) sont formées.

10. Appareil (1) selon l'une quelconque des revendications 7 à 9, dans lequel une décharge de gaz (9) qui est destinée à retirer du gaz présent à l'intérieur du couvercle de réaction (4) et peut être reliée à un moyen de transport (14) pour retirer le gaz du couvercle de réaction (4) est formée.
